# EUROPEAN PATENT APPLICATION

(11) **EP 2 393 238 A1**
(43) Date of publication of application: **07.12.2011**
(21) Application number: 11004497.1
(22) Date of filing: 01.06.2011
(51) Int. Cl.: H04L 12/24, H04L 29/08

(54) **Communication apparatus and method thereof**

(30) Priority: 01.06.2010 US 350170
(71) Applicant: HTC Corporation, Taoyuan County 330 (TW)
(72) Inventor: Yu, Chun-TA, Taoyuan City Taoyuan County 330 (CN); Tseng, Yin-Yeh, Taoyuan City Taoyuan County 330 (CN)
(74) Representative: Emde, Eric

(57) **Abstract**

A communication apparatus and a method thereof are provided. The communication apparatus comprises a memory module, a communication module, and a control module. The memory module stores a MO tree. The communication module receives a device management (DM) command comprising a path of the MO tree and server timing information in a first part. The control module, coupled to the memory module and the communication module, compares client timing information of a tree node of the MO tree in the first part with the server timing information. The communication module further transmits client MO tree information in the first part to a DM server when the client timing information is different from the server timing information.

## Description

### CROSS REFERENCE TO RELATED APPLICATIONS

This application claims the benefit of U.S. Provisional Application No. 61/350,170, filed on 1st June 2010, the entirety of which is incorporated by reference herein.

### BACKGROUND OF THE INVENTION

### Field of the Invention

The present invention relates to device management (DM), and in particular relates to a communication apparatus and a method thereof for Management Object (MO) tree exchange.

### Description of the Related Art

The device management (DM) specification is used to manage telecommunication devices such as mobile phones, PDAs and palm top computers, so that the telecommunication devices may be instructed by a remote DM server to accomplish functions such as device configuration, software installation and upgrade, and error diagnosis.

In the DM specifications specified by the Open Mobile Alliance DM (OMA DM), a DM client at the telecommunication device is adapted to receive Management Objects (MO) and execute a management command delivered by the DM server. A management object tree in the telecommunication device may be regarded as an interface that the DM server uses to manage the telecommunication device through a DM protocol. The DM server also holds an MO tree comprising various management objects to perform management tasks to telecommunication devices. A group of management objects exist in the MO tree. The DM server manages device resources through an operation on a node in the MO tree.

The DM server acquires information in the MO tree from the DM client and accesses the MO for device management based in the information, thereby managing the devices in the telecommunication device. Conventionally, the DM client returns the information acquired by the DM server up in the request to the DM client, regardless of whether the DM server has the information or not. In some cases, the information of the MO tree at the DM client remains the same since a last MO data retrieval, yet the telecommunication device still responds with the acquired information from the DM server, rendering increased transmission bandwidth and transmission duration requirements.

Thus a communication apparatus and method of handling MO tree exchange to reduce the requirement for transmission resources are in need.

### BRIEF SUMMARY OF THE INVENTION

A detailed description is given in the following embodiments with reference to the accompanying drawings.

An embodiment of a method for exchanging device management (DM) tree information between a communication apparatus and a DM server by the communication apparatus is described, comprising receiving, by the communication apparatus, a device management (DM) command comprising server timing information and a path of a MO tree in a first part and,comparing, by the communication apparatus, client timing information of a tree node at the first part at the communication apparatus with the server timing information, and transmitting, by the communication apparatus, a client MO tree information in the first part to the DM server when the client timing information is different from the server timing information.

Another embodiment of a communication apparatus is revealed, comprising a memory module, a communication module, and a control module. The memory module stores a MO tree. The communication module receives a device management (DM) command comprising a path of the MO tree and server timing information in a first part. The control module, coupled to the memory module and the communication module, compares client timing information of a tree node at the first part of the MO tree with the server timing information. The communication module further transmits client MO tree information in the first part of the MO tree to a DM server when the client timing information is different from the server timing information.

### BRIEF DESCRIPTION OF THE DRAWINGS

The present invention can be more fully understood by reading the subsequent detailed description and examples with references made to the accompanying drawings, wherein:

FIG. 1 is a block diagram of an exemplary wireless network system 1 incorporating device management.

FIG. 2 is an exemplary management tree used in device management.

FIG. 3 is a block diagram of an exemplary communication device 3 according to the invention.

FIG. 4 is a flowchart of an exemplary MO tree exchange method 4 according to the invention.

FIG. 5 is a flowchart of an exemplary MO tree updating method 5 according to the invention.

FIG. 6 is a flowchart of an exemplary DM message decoding method 6 according to the invention.

### DETAILED DESCRIPTION OF THE INVENTION

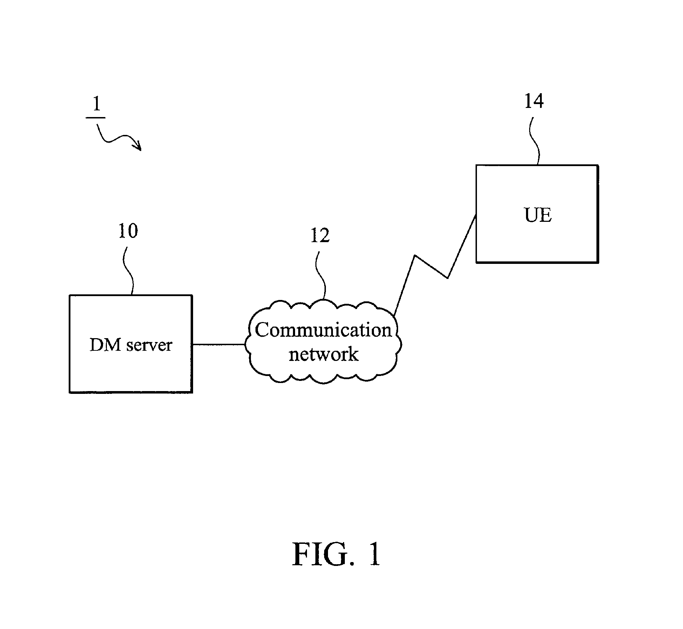

The DM protocol can be implemented on wired or wireless media, and supports a transport layer implementing Wireless Application Protocol (WAP), Hypertext Transfer Protocol (HTTP), or Object Exchange (OBEX) protocols. FIG. 1 is a block diagram of an exemplary wireless network system 1 incorporating device management, comprising a DM server 10, a communication network 12, and an user equipment (UE) 14. The DM server 10 is coupled to the communication network 12, and subsequently to the UE 14 via a radio frequency channel. The DM server 10 may be a network server or a computer acting as a server. The communication network 12 may be a first, second or third generation network such as a Global System for Mobile Communications (GSM), Universal Mobile Telecommunications System (UMTS), Wireless Local Area Network (WLAN), or a combination thereof. The UE 14 may be any device used directly by an end-user for communications, e.g., handhold mobile phones, laptops equipted with broadband network adaptors, or any other device capable of communications.

The DM server 10 performs device configuration, software installation or upgrades, and error diagnosis to a DM client (not shown) on the UE 14 according to the DM protocol. In the UE 14, the data to be managed is arranged as management objects (MO), and is manageable by the DM server 10 by DM commands..

Upon establishing a DM connection between the DM server 10 and the UE 14, the UE 14 sets up a management object (MO) tree to hold management objects. The management objects can be added to the MO tree from the DM server 10 or the client device 14.

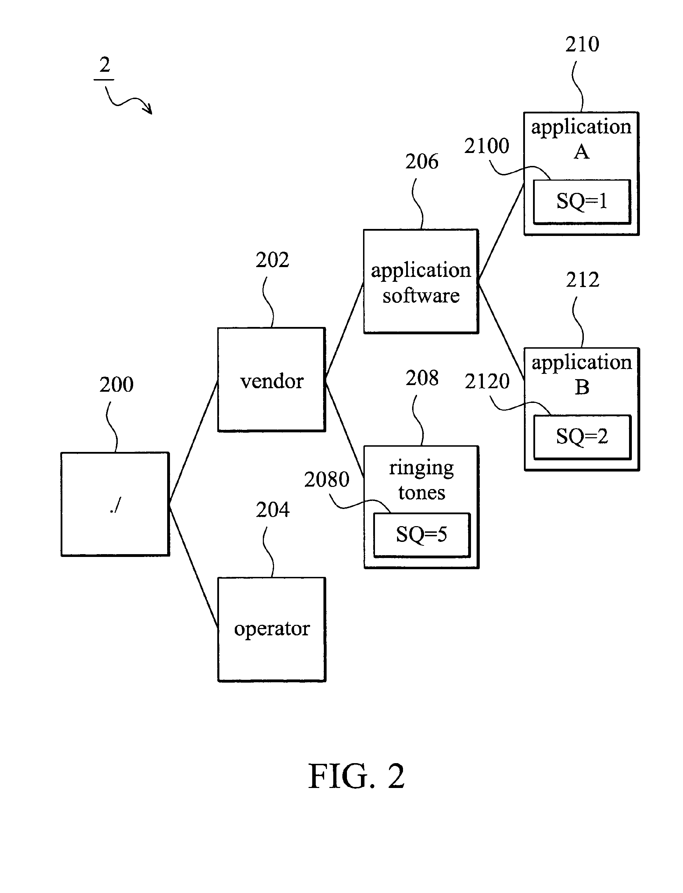

The management object may be an integer or a large entity, such as an application software or a screensaver. Examples of the management objects in the OMA DM protocol include a Software Component Management Object (SCOMO) and Firmware Update Management Object (FUMO), where the SCOMO performs software management on a remote device, including installation, uninstallation, activation and deactivation of software components, and the FUMO allows mobile devices to be updated over-the-air by operators and device manufacturers using the industry-standard protocol OMA DM. In SCOMO device management, the management objects are arranged in a management object tree 2, as depicted in a FIG. 2. The MO tree 2 comprises a root node 200, interior nodes 202, 204, and 206 and leaf nodes 208, 210, and 212. Each node comprises an information and one or more properties. The information may be a single parameter or collected data. The properties may be a timestamp and a sequence number. A sub-tree at the MO tree comprises a parent node and a child node. For example, the parent node 202 and the child nodes 206 and 208 constitute a sub-tree, the parent node 206 and the child nodes 210 and 212 constitute another sub-tree. The root node 200 is the topmost node of the MO tree 2, which branches into the interior node 202 comprising an MO 'Vendor' and the interior node 204 comprising an MO 'Operator', and the interior node 202 further branches into the internal node 206 comprising an MO 'Application software' and the leaf node 208 comprising an MO 'Ringing tones'. Each interior node may further couple to leaf nodes that hold management objects. For example, the interior node 206 comprises the leaf node 210 including an MO 'Application A' and the leaf node 212 including an MO 'Application B'. The MO 'Application A' and MO 'Application B' comprise application software downloaded from the DM server 10, and the MO 'Ringing Tones' contains a ringing tone data. Each management object can be addressed using a Uniform Resource Identifier (URI) originating at the root node './' and moving downwards along the MO tree 2, wherein each management object has a unique name appended to an immediately preceding MO by a backslash '/' as the delimiting character. For example, the management object 'Application Software' can be addressed by the URI './Vendor/'Application Software'.

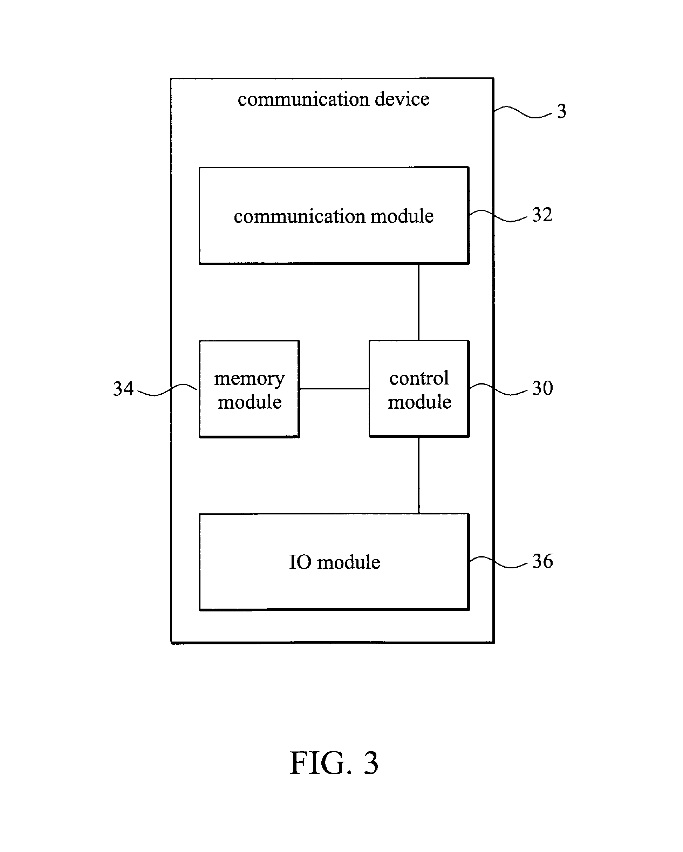

FIG. 3 is a block diagram of an exemplary communication device 3 according to the invention, incorporated in the wireless network system 1 as the UE 14. The communication device 3 comprises a control module 30, a communication module 32, a memory module 34, and an 10 module 36. The communication module 32, the memory module 34, and the 10 module 36 are coupled to the control module 30.

The control module 30 comprises hardware to control operations of the communication module 32, the memory module 34, and the 10 module 36, and perform baseband signal processing including digital signal processing, coding and decoding, and so on.

The communication module 32 comprises hardware to perform analog to digital conversion (ADC), digital to analog conversion (DAC), gain adjusting, modulation, demodulation, and so on. The communication module 32 receives the RF signals that carry the DM messages from the DM server 12 and down-converts the received RF wireless signals to baseband signals to be processed by the control module 30, or up-converts baseband signals from the control module 30 to RF wireless signals for uplink transmission. The DM message may comprise a part of or a complete MO. The communication module 32 may comprise a mixer to up-convert the baseband signals with a component carrier signal oscillated at a radio frequency of the wireless communications system. The radio frequency may be 900MHz, 1900MHz, or 2100MHz utilized in WCDMA systems, or may be 900MHz, 2100MHz, or 2.6GHz utilized in LTE systems, or others depending on the radio access technology (RAT) in use.

Upon establishment of a DM session, the control module 30 sets up a management object tree in the memory module 34. The memory module 34 may be a magnetic disk storage or any other medium which can be used to store digital data accessible by a general purpose or special purpose processor. Prior to transmitting a management object, the DM server sends an ADD command to create a management object leaf node to the MO tree to provide storage of the management object, so that the communication module 32 can store the received management object in the MO leaf node. A GET command (DM command) is issued by the DM server 12 to acquire information in the MO tree at the communication device 3. The information may be a value in a tree node, a property of the tree node, or a combination thereof. The GET command comprises an URI address of a node in the MO tree. When the URI specifies a leaf node, the communication module returns the information in the specified leaf node. When receiving an interior node addressed by an URI, the communication module 32 responds with the information of child nodes under the addressed interior node, or an empty child list when there is no child node. The GET command may further carry an attribute to retrieve various information in the MO tree node. Conventionally, the attribute may be "Struct", "StructData", "TND", "MORoot", or "MORootData".

In the present invention, the attribute may further be a "Timestamp" or a "Sequence number" (server timing information), where the timestamp indicates a time for which the management object in the MO tree was last added or updated to the node, and the sequence number indicates a version of a management object at the tree node. When the GET command includes a timestamp, the communication device 3 can consider the timestamp as a modified time for the last modification of the server MO tree, the server sub-tree, or a server tree node. When the GET command includes a sequence number, the communication device 3 can consider the sequence number as an indication of the version of the modified server sub-tree or server tree node. Likewise, each node at the client MO tree comprises MO and the "Timestamp" or a "Sequence number" property (client timing information), where the timestamp indicates a time for which the management object was last added or updated to the node, and the sequence number property represents a version of the management object at the node.

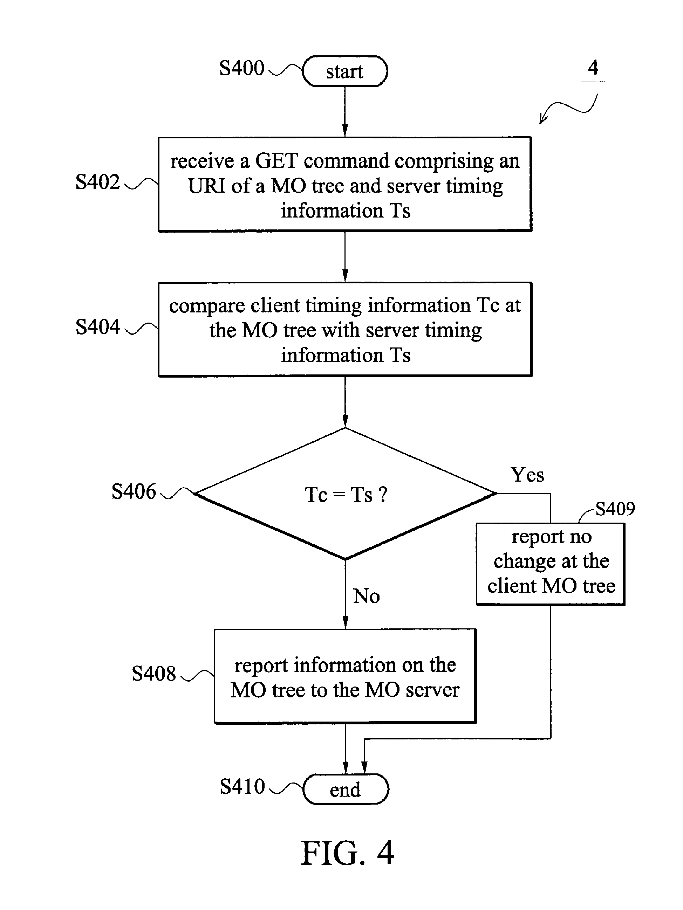

Upon receiving the GET command comprising a path of a MO tree at the communication device 3 (URI) and a server timing information in a first part, the control module 30 compares the client timing information of each node in the first part with the server timing information according to the MO tree exchange method 4 in FIG. 4, so that the communication module 32 can only return information in the modified node to the DM server 12, resulting in reduced transmission traffic and decreased requirement for transmission resources, such as bandwidth, in the telecommunication system. It should be noted that the part of the MO tree may be a sub-tree, a node or anything of the MO tree.

FIG. 4 is a flowchart of an exemplary MO tree exchange method 4 according to the invention, incorporating the communication system 1 in the FIG. 1 and the communication device 3 in the FIG. 3.

In Step S400, the MO tree exchange method 4 is initiated at the communication device 3 to receive a DM command from the DM server 10, including setting up a client MO tree in the memory module 34. The client MO tree comprises the interior nodes and the leaf nodes that hold the management objects. Each leaf node in the client MO tree has a client timing information property indicating the time for which the management object was added or updated to the node. Each leaf node in the client MO tree also has a client timing information property indicating a number of times that the leaf node has been updated.

In Step S402, the communication module 32 receives a GET command (DM command) from the DM server 10, which comprises a URI address of the server MO tree. The GET command comprises a URI addressing a part of the client MO tree. The GET command may comprise an ordinary or encoded part of the server MO tree. In the case where the encoded part of the server MO tree is in the GET command, the control module 30 may employ the DM message decoding method 6 of the invention to decode the encoded part of the server MO tree. The GET command also comprises one or more server timing information Tₛ associated with the nodes in a corresponding part of the server MO tree. The part of the client MO tree may be a sub-tree or a complete client MO tree, comprising interior nodes and leaf nodes that hold management objects synchronized or asynchronized with management objects in the server MO tree. The server timing information Tₛ is associated with an interior node or a leaf node in the server MO tree. Similarly, client timing information T_{c} is associated with an interior node or a leaf node of the client MO tree. The server timing information Tₛ and client timing information T_{c} comprise the same data type, and may be a timestamp indicating the time for which the management object in the MO tree was last updated to the node or a sequence number indicating a version of a management object at the MO tree.

In Step S404, the control module 30 compares client timing information T_{c} at each node in the part of the client MO tree with server timing information Tₛ. When the client timing information T_{c} exceeds than the server timing information Tₛ, the management object in the leaf node at the part of the client MO tree is newer than that in the server MO tree, such that the communication device 3 may send information in the newer leaf node to the DM server 12, so that the DM server 12 can determine an action to be taken accordingly. When the client timing information T_{c} equals to the server timing information Tₛ, the management object in the node of the server MO tree is synchronized with the management object in the corresponding node of the client MO tree, that means there is no change at the client MO tree.

In Step S406, the control module 30 determines whether the client timing information T_{c} equals to the server timing information Tₛ. If so, the MO tree exchange method 4 goes to Step S409, and if not, the MO tree exchange method 4 continues on Step S408. When the client timing information T_{c} at the node of the client MO tree equals to the server timing information Tₛ of the server MO tree, the management object in the leaf node is considered unchanged from the last data retrieval from the DM server 12, thus the communication module 32 informs the DM server 12 there is no change at the client MO tree and no update for the nodes at the client MO tree is required. Conversely, when the client timing information T_{c} at the node of the client MO tree is different from the server timing information Tₛ of the server MO tree, the communication module 32 informs the DM server 12 of the information in the changed management object.

In Step S408, the communication module 32 reports the client MO tree information to the DM server 12. The communication module 32 may transmit only the information in the node that carries the management object which is different from that in the server MO tree. The information comprises the updated structure of the client MO tree, the updated management object, the client timing information, or a combination thereof.

In Step S409, the communication module 32 reports no change at the client MO tree, no MO tree update is required. The MO tree exchange method 4 then exits at Step S410.

At Step S410, the MO tree exchange method 4 is completed and exited.

In one embodiment, the communication module 32 receives a GET command comprising the URI addressing a part of the client MO tree, an MO identifier identifying one or more nodes in the part of the client MO tree, and the server timing information (S402). The control module 30 determines the nodes in the part of the client MO tree according to the MO identifier, determines the client timing information at the determined nodes, compares the client timing information of each determined node with the server timing information (S404), determines whether the client timing information of each determined node equals to the server timing information (S406), exits the method 4 if so (S410), and transmits the information in the determined node when the corresponding client timing information is different from the server timing information (S408).

In one example, the timing information is a timestamp, the communication module 32 receives a GET command comprising the URI addressing a part of the client MO tree and a server timestamp for the part of the last modified server MO tree (S402). The control module 30 identifies one or more nodes in the part of the client MO tree, determines the client timestamp at the determined nodes, compares the client timestamp of each determined node with the server timestamp (S404), determines whether the client timestamp of each determined node equals to the server timestamp (S406), exits the method 4 if so (S410), and transmits the information in the determined node when the corresponding client timestamp is different from the server timestamp (S408).

In another example, the timing information is a sequence number, and the communication module 32 receives a GET command comprising the URI addressing a part of the client MO tree and one or more sequence numbers corresponding to the nodes in the part of the server MO tree (S402). The control module 30 identifies one or more nodes in the part of the client MO tree, determines the client sequence number at the determined nodes, compares the client sequence number of each determined node with the corresponding server sequence number (S404), determines whether the client sequence number equals to the server sequence number (S406), exits the method 4 if so (S410), and transmits the information in the determined node when the corresponding client sequence number is different from the server sequence number (S408).

The MO tree exchange method 4 transmits only the information in the node when the client timing information is different from the server timing information, thereby reducing the transmission traffic between the communication module and the DM server and decreasing the need for transmission resources in the telecommunication system.

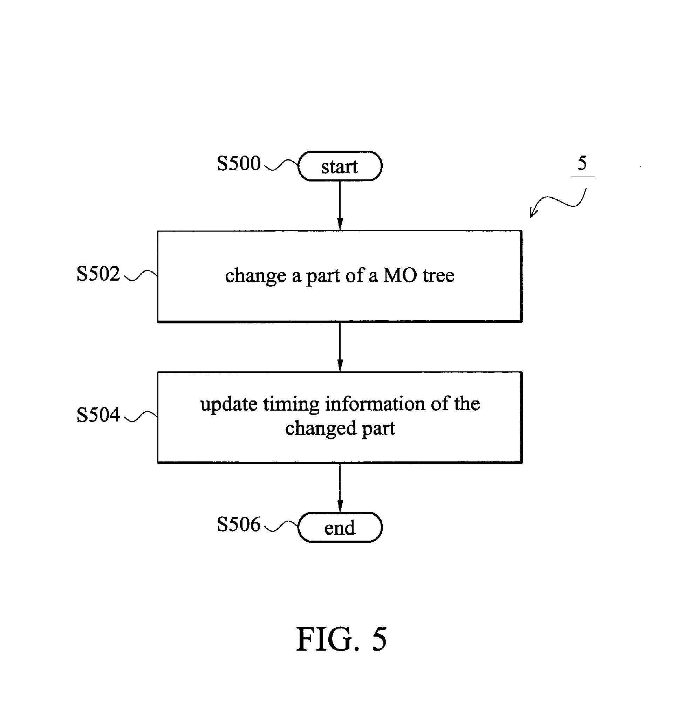

FIG. 5 is a flowchart of an exemplary MO tree updating method 5 according to the invention, incorporating the communication system 1 in the FIG. 1 and the communication device 3 in the FIG. 3.

In Step S500, the MO tree updating method 5 is initiated at the communication device 3 to update data in the client MO tree, including setting up the client MO tree in the memory module 34. The client MO tree comprises the leaf nodes that hold the management objects.

In Step S502, the control module 30 changes a part of the client MO tree. The part of the client MO tree may be a sub-tree that comprises a parent node and a child node coupled thereto. The control module 30 may add, replace, or delete one or more parent nodes or child nodes at the client MO tree.

Next in Step S504, the control module 30 updates timing information of the changed part. The control module 30 can update the timing information of one or more relevant nodes that have been changed in Step S502. The relevant node may comprise the modified child node or the parent node thereof. In one embodiment, the control module 30 updates the timing information of the child node during or after modification thereof. In another embodiment, the control module 30 updates the timing information of the parent node during or after one child node thereof is added thereto, replaced, or deleted therefrom. The timing information may be a timestamp indicating the time for which the management object in the client MO tree was last updated to the node or a sequence number indicating a version of a management object at the client MO tree. The timestamp may be compliant with a UTC [IS08601] basic format, representing an update time that the child node at the MO tree was last updated. For example, the timing information is a timestamp, the control module 30 records the modification time at the modified child node as a timestamp 20010711T163817Z, representing July 11, 2001 at 16 hours, 38 minutes and 17 seconds. In another embodiment, the timing information is a sequence number, the control module 30 can increase the sequence number by one to derive an updated sequence number, indicating the updated version for the modified child node.

In Step S506, the MO tree updating method 5 is completed and exited.

Although the MO tree updating method 5 illustrates an approach to update the timing information for the communication device 3, it should be appreciated that the method can be adapted for uses in the DM server. The MO tree updating method 5 provides timing information for each node in a MO tree, so that the communication device or the DM server can use the timing information to identify the modified time of each node.

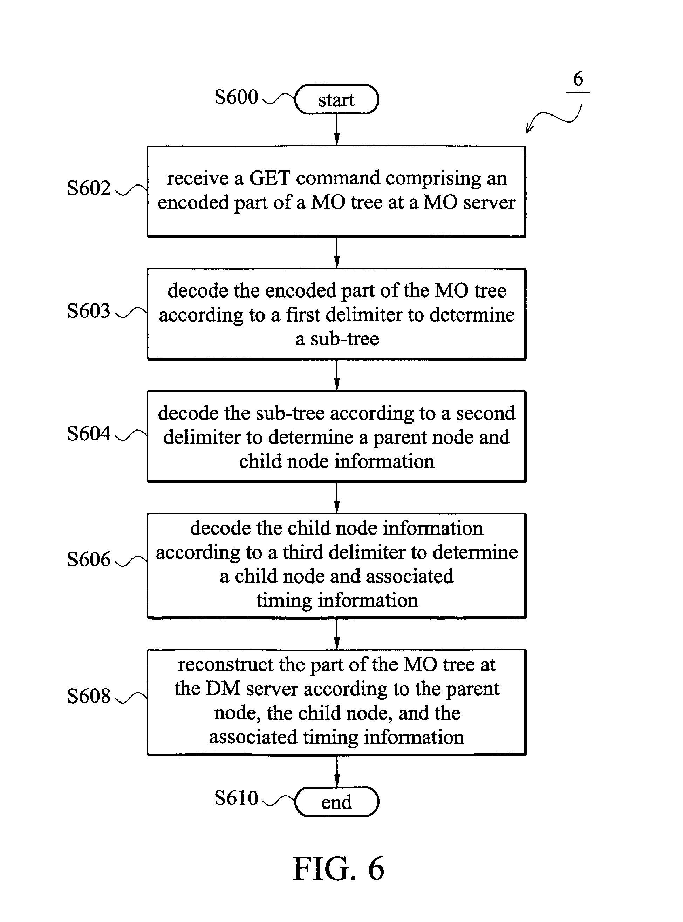

FIG. 6 is a flowchart of an exemplary DM message decoding method 6 according to the invention, incorporating the communication system 1 in FIG. 1 and the communication device 3 in FIG. 3.

In Step S600, the DM message decoding method 6 is initiated at the communication device 3 to receive a DM command from the DM server 10, including setting up the client MO tree in the memory module 34. The client MO tree comprises the leaf nodes that hold the management objects.

In Step S602, the communication module 32 receives a GET command comprising an encoded part of a server MO tree. The encoded part of a server MO tree includes a serialized sub-tree or complete MO tree and one or more sequence numbers corresponding to tree nodes therein. The part of the server MO tree comprises one or more sub-trees. Taking the MO tree 2 in FIG. 2 as an example, the MO tree 2 may be encoded as "./.:Vendor:Operator/Vendor:Application software:Ringing tones=5/Application software:Application A=1:Application B=2". Each sub-tree is separated by a first delimiter '/', comprising a parent node and one or more child node coupled thereto, wherein each child node has a corresponding sequence number indicating a version of the management object therein. Each node in the sub-tree is separated by a second delimiter ':', with the first node in the sub-tree being the parent node and the other nodes being the child nodes. The corresponding sequence number for each child node is identified by a third delimiter '='. The control module 30 decodes the encoded part of the server MO tree to identify each node in the server MO tree and the sequence number thereof.

In Step S603, the control module 30 decodes the encoded part of the MO tree according to the first delimiter to determine the sub-tree. For example, the control module 30 decodes "./.:Vendor:Operator/Vendor:Application software:Ringing tones=5/Application software:Application A=1:Application B=2" with the first delimiter '/' to determine 3 sub-trees ".:Vendor:Operator", "Vendor:Application software:Ringing tones=5", and "Application software:Application A=1:Application B=2".

In Step S604, the control module 30 decodes the sub-tree according to the second delimiter to determine the parent node and the child node. In the example, the control module 30 decodes the sub-tree "Application software:Application A=1:Application B=2" with the second delimiter ':' to identify 3 nodes "Application software", "Application A=1", and "Application B=2", with the first node ""Application software" in the sub-tree being the parent node, and the other nodes "Application A=1", and "Application B=2" being the child node information.

In Step S606, the control module 30 decodes the child node information according to the third delimiter to determine the child node and the associated timing information. In the preceding example, the control module 30 decodes the child node information "Application A=1" to determine that the child node is Application A and the associated sequence number is 1, and decodes the child node information "Application B=2" to determine that the child node is Application B and the associated sequence number is 2.

In Step S608, the control module 30 reconstructs the part of the MO tree at the DM server according to the parent node, the child node, and the associated timing information. Since the control module 30 has the information in the parent nodes, the child nodes, and the associated sequence numbers that comprise the sub-trees, the part of the MO tree may be reconstructed accordingly.

In Step S610, the DM message decoding method 6 is completed and exited.

Although the DM message decoding method 6 is illustrated using the sequence number as the timing information associated with each child node, people skilled in the art will appreciate that the method 6 can be adapted for timestamp with the principle of the invention, those skilled in the art will also recognize that the method 6 can be adapted for the timing information associated with each parent node with the principle of the invention. Although the decoding method 6 is utilized in the communication device 3 in the description, it can be adapted for uses in the DM server. The DM message decoding method 6 provides a means to decode an encoded MO tree, allowing the encoded data to be transmitted between the communication device and the DM server, thereby reducing transmission traffic and decreasing requirement for transmission resources in the telecommunication system.

As used herein, the term "determining" encompasses calculating, computing, processing, deriving, investigating, looking up (e.g., looking up in a table, a database or another data structure), ascertaining and the like. Also, "determining" may include resolving, selecting, choosing, establishing and the like.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device, discrete gate or transistor logic, discrete hardware components or any combinati in thereof designed to perform the functions described herein. A general purpose processor may be a microprocessor, but in the alternative, the processor may be any commercially available processor, controller, microcontroller or state machine.

The operations and functions of the various logical blocks, modules, and circuits described herein may be implemented in circuit hardware or embedded software codes that can be accessed and executed by a processor.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for exchanging device management (DM) tree information between a communication apparatus and a DM server by the communication apparatus, comprising:
receiving, by the communication apparatus, a DM command comprising
server timing information and a path of a MO tree in a first part and;
comparing, by the communication apparatus, client timing information of a
tree node in the first part with the server timing information; and
transmitting, by the communication apparatus, a client MO tree information in
the first part to the DM server when the client timing information is different from the server timing information.

2. The method as claimed in claim 1, wherein the server timing information and the client timing information are timestamps.

3. The method as claimed in claim 1, wherein the server timing information and the client timing information are sequence numbers.

4. The method as claimed in claim 1, wherein the client MO tree information in the first part is transmitted to the DM server when the client timing information exceeds the server timing information.

5. The method as claimed in claim 1, wherein the client MO tree information in the first part comprises the client timing information.

6. The method as claimed in claim 1, wherein the DM command further comprises an encoded second part of a MO tree at the DM server, and the method further comprises:
decoding, by the communication apparatus, the encoded second part of the
MO tree at the DM server to reconstruct the second part of the MO tree at the DM server and the server timing information; and associating, by the communication apparatus, the server timing information
with the second part of the MO tree at the DM server.

7. The method as claimed in claim 1, wherein the DM command comprises an encoded second part of a MO tree at the DM server; the encoded second part of the MO tree at the DM server comprises a sub-tree identified by a first delimiter, the sub-tree comprises a parent node, a child node, and a sequence number associated with the child node, the parent node and child node are separated by a second delimiter, and the child node and the associated sequence number are separated by a third delimiter, and the method further comprises:
decoding, by the communication apparatus, the encoded second part according
to the first delimiter to determine the sub-tree;
decoding, by the communication apparatus, the sub-tree according to the
second delimiter to determine the parent node and child node information;
decoding, by the communication apparatus, the child node information
according to the third delimiter to determine the child node and the associated sequence number; and
reconstructing, by the communication apparatus, the second part of the MO
tree at the DM server according to the parent node, the child node, and the associated sequence number.

8. The method as claimed in claim 1, wherein:
the MO tree of the first part comprises a parent node and a child node coupled
thereto;
the server timing information is a first timestamp;
the client timing information is a second timestamp of the child node;
the comparing step comprises comparing the first timestamp with the second
timestamp; and
the transmitting step comprises transmitting the client MO tree information in
the first part when the second timestamp exceeds the first timestamp.

9. The method as claimed in claim 1, wherein:
the DM command further comprises an object identifier identifying an
management object in the first part; and
the method further comprises determining, by the communication apparatus,
the object according to the object identifier and the path of the MO tree in the first part; and
the comparing step comprises comparing the client timing information of the
object with the server timing information.

10. A communication apparatus, comprising a memory module, a communication module and a control module coupled to the memory module and the communication module, **characterized by** through the memory module, the communication module and the control module the communication apparatus comprising respective means for carrying out the steps of the method of claims 1, 2, 3, 4, 5, 6, 7, 8 or 9.
